# EUROPÄISCHE PATENTSCHRIFT

(11) **EP 0 848 531 B1**
(45) Veröffentlichungstag und Bekanntmachung des Hinweises auf die Patenterteilung: **10.01.2007**
(21) Anmeldenummer: 97118868.5
(22) Anmeldetag: 30.10.1997
(51) Int. Cl.: H04M 1/57

(54) **Telekommunikationseinrichtung**
Telecommunication device
Dispositif de télécommunication

(30) Priorität: 11.12.1996 DE 19651383
(43) Veröffentlichungstag der Anmeldung: 17.06.1998
(73) Patentinhaber: ROBERT BOSCH GMBH, 70442 Stuttgart (DE)
(72) Erfinder: Maier, Wolfgang, 63225 Langen (DE); Winter, Ruediger, 64560 Riedstadt (DE); Kiesewetter, Wolfgang, 60529 Frankfurt (DE)

(56) Entgegenhaltungen:
- EP-A- 0 464 610
- DE-A- 3 128 529
- DE-A- 3 902 636
- US-A- 5 546 447
- PATENT ABSTRACTS OF JAPAN vol. 017, no. 695 (E-1480), 20. Dezember 1993 (1993-12-20) & JP 05 236119 A (TOSHIBA CORP), 10. September 1993 (1993-09-10)

## Beschreibung

### Stand der Technik

Die Erfindung geht von einer Telekommunikationseinrichtung nach der Gattung des Hauptanspruchs aus.

Aus der Produktinformation "Telefonieren plus PC-Komfort. Bosch Integral + phone und Ihr PC." ist bereits eine Telekommunikationseinrichtung bekannt, bei der ausgelöst durch die Rufnummernidentifizierung im ISDN zeitgleich mit dem ankommenden Gespräch die entsprechende Kundendatei mit Kundendaten angezeigt wird.

Aus der EP-A-0 464 610 ist eine Telekommunikationseinrichtung mit einer Rufidentifikationsschaltung zur Identifikation der Rufnummer des rufenden Teilnehmers, einem Speicher zur Speicherung von Rufnummern und einem Vergleicher zum Vergleich von Rufnummern rufender Teilnehmer mit im Speicher abgelegten Rufnummern bekannt. Falls die Rufnummer im Speicher abgelegt ist, wird eine zu dieser Rufnummer gehörige Information auf einer Anzeigeeinrichtung angezeigt. Durch geeignete Vergleichsalgorithmen werden Einzelbestandteile von Rufnummern ausgewertet.

Die US-A-5 546 447 offenbart eine Vorrichtung zur Anzeige von Anruferidentifikationsinformationen. Für den Fall, dass in einer entsprechenden Datenbank eine übermittelte Rufnummer nicht auffindbar ist, wird die Vorwahl entfernt und eine erneute Suche in der Datenbank durchgeführt.

### Vorteile der Erfindung

Die erfindungsgemäße Telekommunikationseinrichtung mit den Merkmalen des Hauptanspruchs hat demgegenüber den Vorteil, dass auch Nebenstellenhauptnummern in der Telekommunikationseinrichtung Daten zugeordnet werden können, die dann unabhängig von der Durchwahlnummer des an die Nebenstellenanlage angeschlossenen rufenden Teilnehmers angezeigt werden. Auf diese Weise ist eine einfache und eindeutige Identifizierung einer Nebenstellenanlage unabhängig von der Durchwahlnummer des an die Nebenstellenanlage angeschlossenen rufenden Teilnehmers möglich, die zudem besonders schnell erfolgen kann, da bei Nebenstellenhauptnummern weniger Ziffern zu vergleichen sind, als bei kompletten Durchwahlnummern.

Ein weiterer Vorteil besteht auch darin, daß an eine Nebenstellenanlage angeschlossenen rufenden Teilnehmern, deren Daten sich nicht voneinander unterscheiden, in der Telekommunikationseinrichtung nicht jeweils ein eigener Datensatz zugeordnet werden muß, sondern über die Nebenstellenhauptnummer ein.einheitlicher Datensatz zugeordnet werden kann, wodurch in der Telekommunikationseinrichtung Speicherplatz eingespart wird. Ein solcher Fall tritt beispielsweise dann auf, wenn ein rufender Teilnehmer nicht von seinem eigenen an eine Nebenstellenanlage angeschlossenen Teilnehmerendgerät aus die Telekommunikationseinrichtung anruft, sondern beispielsweise von einem ebenfalls an die Nebenstellenanlage angeschlossenen anderen Teilnehmerendgerät in einem Besprechungszimmer, oder wenn dieser Teilnehmer durch einen anderen rufenden Teilnehmer, dessen Teilnehmerendgerät ebenfalls an die Nebenstellenanlage angeschlossen ist, vertreten wird.

Durch die in den Unteransprüchen aufgeführten Maßnahmen sind vorteilhafte Weiterbildungen und Verbesserungen der im Hauptanspruch angegebenen Telekommunikationseinrichtung möglich.

Ein Vorteil besteht darin, daß ein Datensatz mehreren im Speicher abgelegten Rufnummern zugeordnet ist. Auf diese Weise lassen sich auch unabhängig vom Anschluß an eine Nebenstellenanlage rufende Teilnehmer speicherplatzsparend in der Telekommunikationseinrichtung durch einen einzigen Datensatz kennzeichnen. Dies ist beispielsweise dann von Bedeutung, wenn ein rufender Teilnehmer die Telekommunikationseinrichtung teilweise über eine Nebenstellenanlage und teilweise über ein nicht an die Nebenstellenanlage angeschlossenes Endgerät, wie beispielsweise ein Mobiltelefon, anruft. Andererseits können auf diese Weise auch Nebenstellen einer Nebenstellenanlage zu Gruppen zusammengefaßt werden, denen jeweils ein gemeinsamer Datensatz zugeordnet ist. Auf diese Weise wird eine besonders flexible Zuteilung von Datensätzen zu Rufnummern rufender Teilnehmer ermöglicht.

Vorteilhaft ist weiterhin, daß im Speicher abgelegten Rufnummern, die Nebenstellennummern sind, die jeweilige Anzahl der Durchwahlziffern zugeordnet und ebenfalls in der Telekommunikationseinrichtung gespeichert ist. Auf diese Weise kann in der Telekommunikationseinrichtung auf einfache und schnelle Weise die zur Ermittlung der Nebenstellenhauptnummer erforderliche Anzahl zu vergleichender Rufnummernziffern ermittelt werden.

### Zeichnung

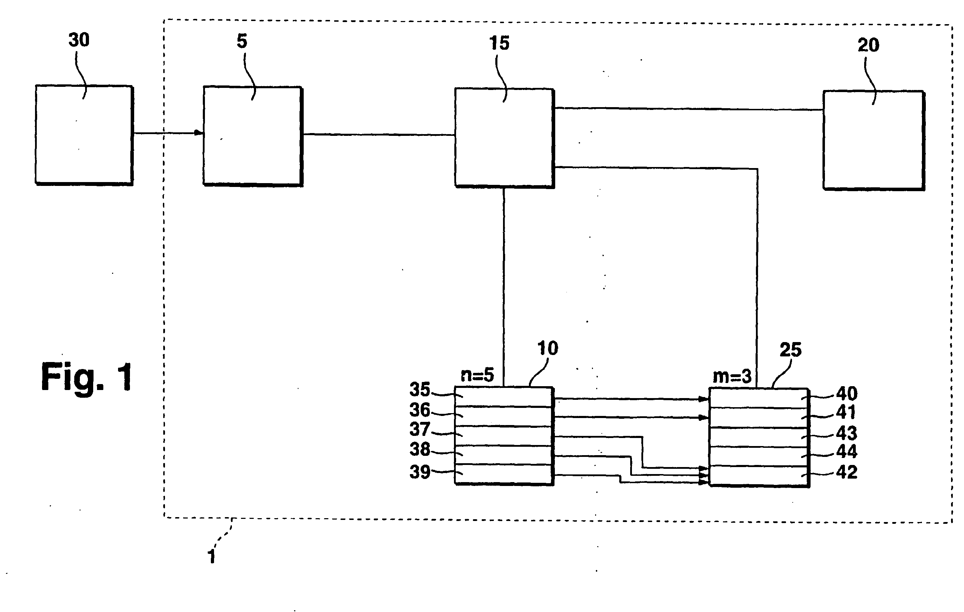

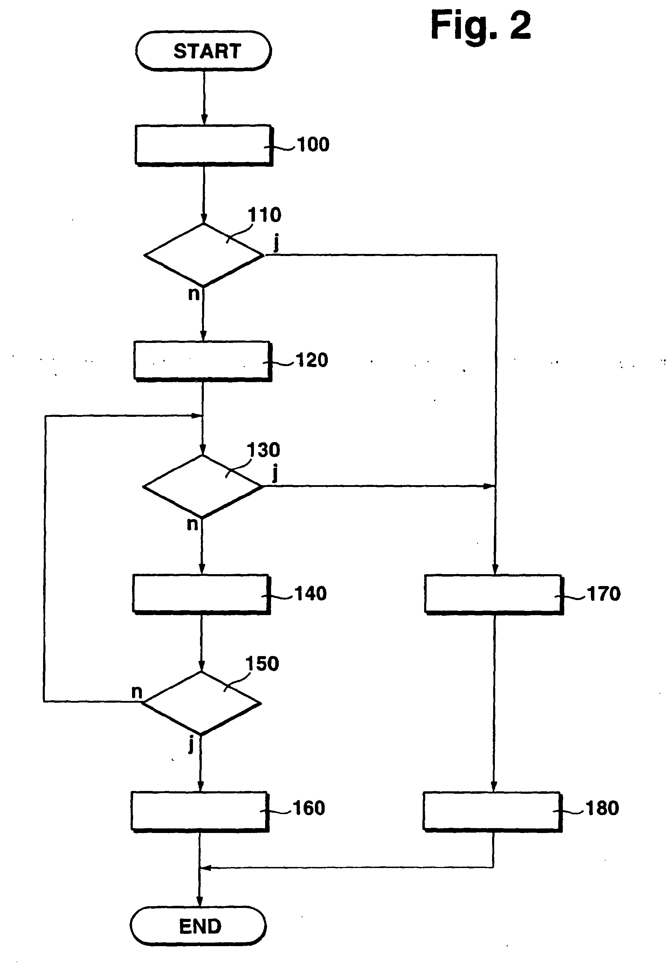

Ein Ausführungsbeispiel ist in der Zeichnung dargestellt und in der nachfolgenden Beschreibung näher erläutert. Es zeigen Figur 1 ein Blockschaltbild einer erfindungsgemäßen Telekommunikationseinrichtung und Figur 2 einen Ablaufplan für den Rufnummernvergleich.

### Beschreibung des Ausführungsbeispiels

In Figur 1 kennzeichnet 1 eine Telekommunikationseinrichtung, die an ein Telekommunikationsnetz 30 angeschlossen ist. Die Telekommunikationseinrichtung 1 umfaßt dabei eine Rufidentifikationsschaltung 5, die mit dem Telekommunikationsnetz 30 verbunden ist und an die ein Vergleicher 15 der Telekommunikationseinrichtung 1 angeschlossen ist. Die Telekommunikationseinrichtung 1 umfaßt weiterhin einen an den Vergleicher 15 angeschlossenen ersten Speicher 10 mit n Speicherplätzen, denen m Speicherplätze eines ebenfalls an den Vergleicher 15 angeschlossenen zweiten Speichers 25 zugeordnet sind. Die Telekommunikationseinrichtung 1 weist außerdem eine Anzeigevorrichtung 20 auf, die ebenfalls an den Vergleicher 15 angeschlossen ist.

Der erste Speicher 10 umfaßt n = 5 Speicherplätze 35, 36,...,39 und der zweite Speicher 25 umfaßt m = 3 Speicherplätze 40, 41, 42. Dabei ist dem ersten Speicherplatz 35 des ersten Speichers 10 der erste Speicherplatz 40 des zweiten Speichers 25, dem zweiten Speicherplatz 36 des ersten Speichers 10 der zweite Speicherplatz 41 des zweiten Speichers 25 und den restlichen Speicherplätzen 37, 38, 39 des ersten Speichers 10 der dritte Speicherplatz 42 des zweiten Speichers 25 zugeordnet. In den Speicherplätzen 35, 36,...,39 des ersten Speichers 10 ist jeweils eine Rufnummer eines Teilnehmers des Telekommunikationsnetzes 30 gespeichert und in den Speicherplätzen 40, 41, 42 des zweiten Speichers 25 sind Daten von diesen Teilnehmern des Telekommunikationsnetzes 30 in Form von jeweils einem Datensatz gespeichert. Die Wahl der Anzahl der Speicherplätze im ersten und im zweiten Speicher 10, 25 ist beispielhaft und kann je nach Bedarf auch anders gewählt werden. Dasselbe gilt für die in Figur 1 gewählte Zuordnung der Speicherplätze 40, 41, 42 des zweiten Speichers 25 zu den Speicherplätzen 35,...,39 des ersten Speichers 10. Dabei ist der Figur 1 zu entnehmen, daß der zweite Speicher 25 zwei nicht belegte Speicherplätze 43, 44 besitzt, die eingespart werden könnten oder für eine anders gewählte Zuordnung der Speicherplätze 40,...,44 des zweiten Speichers 25 zu den Speicherplätzen 35,...,39 des ersten Speichers 10 belegt werden könnten. In den Speicherplätzen 35,...,39 des ersten Speichers 10 ist jeweils eine vollständige Rufnummer oder eine Nebenstellenhauptnummer abgespeichert. Im Falle der Speicherung einer Nebenstellenhauptnummer beinhaltet der zugeordnete Datensatz im entsprechenden Speicherplatz des zweiten Speichers 25 auch die Anzahl der sich an die Nebenstellenhauptnummer anschließenden Durchwahlziffern. Die Zuordnung von Datensätzen im zweiten Speicher 25 zu Rufnummern im ersten Speicher 10 ist völlig beliebig und kann beispielsweise durch eine in Figur 1 nicht dargestellte Eingabeeinheit der Telekommunikationseinrichtung 1 vom Benutzer eingestellt werden. Ein Datensatz kann beispielsweise einer vollständigen Durchwahlrufnummer, einer Nebenstellenhauptnummer ohne Durchwahlziffern, mehreren vollständigen Durchwahlrufnummern, mehreren Nebenstellenhauptnummern ohne Durchwahlziffern oder dergleichen zugeordnet werden.

Bei Verwendung der Telekommunikationseinrichtung 1 in einer Firma können die Speicherplätze 40,...,44 des zweiten Speichers 25 über die in Figur 1 nicht dargestellte Eingabeeinheit mit Kundendatensätzen belegt werden. Dabei kann es bei einem Kunden mit einer Nebenstellenanlage sinnvoll sein, in einem Speicherplatz des ersten Speichers 10 die Nebenstellenhauptnummer des Kunden über die in Figur 1 nicht dargestellte Eingabeeinheit zu speichern und im zugeordneten Speicherplatz des zweiten Speichers 25 zusätzlich zum Kundendatensatz die Anzahl der an die Nebenstellenhauptnummer anzuhängenden Durchwahlziffern abzulegen, so daß bei einem Anruf von einer beliebigen Nebenstelle des Kunden über die Nebenstellenhauptnummer im ersten Speicher 10 der zugehörige Kundendatensatz im zweiten Speicher 25 ermittelt werden kann. Es können jedoch auch mehrere Kundendatensätze zu einer Kundenfirma geführt werden, wobei jeweils mehreren vollständigen Durchwahlrufnummern dieser Firma im ersten Speicher 10 genau ein Kundendatensatz im zweiten Speicher 25 zugeordnet werden kann. Dabei kann ein solcher Datensatz außer mehreren Nebenstellen einer Nebenstellenanlage auch nicht an die Nebenstellenanlage angeschlossenen Teilnehmerendgeräten des Telekommunikationsnetzes 30, wie beispielsweise Mobiltelefonen zugeordnet werden. Eine Nebenstellenhauptnummer kann in einem Speicherplatz des ersten Speichers 10 auch in Form einer vollständigen Durchwahlrufnummer gespeichert sein, wobei der vollständigen Durchwahlrufnummer ein Datensatz im zweiten Speicher 25 zugeordnet ist, der auch die Anzahl der an die Nebenstellenhauptnummer angehängten Durchwahlziffern beinhaltet. Erreicht die Telekommunikationseinrichtung 1 ein Anruf von einer Nebenstelle derselben Nebenstellenanlage jedoch mit unterschiedlicher Durchwahlrufnummer, die im ersten Speicher 10 nicht abgelegt ist, so wird diese Durchwahlrufnummer bei einem ersten Vergleich mit den im ersten Speicher 10 gespeicherten Rufnummern nicht identifiziert. Bei einem zweiten Vergleich wird dann aus dem zweiten Speicher 25 die Anzahl der an die Nebenstellenhauptnummer angehängten Durchwahlziffern ermittelt und entsprechend der ermittelten Anzahl die letzten Ziffern der zu vergleichenden Rufnummern nicht ausgewertet. Auf diese Weise wird die zur vollständigen Durchwahlrufnummer gehörenden Nebenstellenanlage identifiziert. Dabei besteht auch die Möglichkeit, der vollständigen Durchwahlrufnummer im zweiten Speicher 25 in einem ersten Speicherplatz einen ersten Datensatz und der zugehörigen Nebenstellenhauptnummer in einem zweiten Speicherplatz des zweiten Speichers 25 einen zusätzlichen Datensatz zuzuordnen, wobei die Adresse des zweiten Speicherplatzes dem Datensatz im ersten Speicherplatz beigefügt ist, so daß beim zweiten Vergleich eine entsprechende Zuordnung dieses zweiten Speicherplatzes zur Nebenstellenhauptnummer auch realisiert werden kann. Ansonsten sind die Adressen für die Zuordnung der Speicherplätze 35,...,39 des ersten Speichers 10 zu den Speicherplätzen 40,...,44 des zweiten Speichers 25 in den entsprechenden Speicherplätzen 35,...,39 des ersten Speichers 10 zusätzlich zu den Rufnummern abgespeichert. Auf diese Weise kann nach Identifizierung der Rufnummer eines rufenden Teilnehmers auf den zugehörigen Speicherplatz 40,...,44 des zweiten Speichers 25 zugegriffen werden. Wird bei einem zweiten Vergleich gemäß obiger Beschreibung eine in einer vollständigen Durchwahlrufnummer enthaltene Nebenstellenhauptnummer im ersten Speicher 10 identifiziert, der ein zusätzlicher Datensatz im zweiten Speicher 25 zugeordnet ist, so erfolgt die Zuordnung der Nebenstellenhauptnummer zu diesem zusätzlichen Datensatz über die dem der vollständigen Durchwahlrufnummer zugeordneten Datensatz beigefügte Adresse im zweiten Speicher 25. Auf dieselbe Weise wird die für den zweiten Vergleich erforderlich Kürzung um die Anzahl der Durchwahlziffern aus dem zweiten Speicher 25 aufgrund der im ersten Speicher 10 abgelegten Adressierung ermittelt.

Der Ablauf für den Aufruf des zur Rufnummer eines rufenden Teilnehmers gehörenden Datensatzes des zweiten Speichers 25 durch den Vergleicher 15 wird in Figur 2 anhand eines Ablaufplanes dargestellt.

Bei Programmpunkt 100 wird eine vom Telekommunikationsnetz 30 an die Rufidentifikationsschaltung 5 übertragene Rufnummer eines die Telekommunikationseinrichtung 1 rufenden Teilnehmers in der Rufidentifikationsschaltung 5 ermittelt und an den Vergleicher 15 weitergeleitet. Im Vergleicher 15 wird dann bei Programmpunkt 110 geprüft, ob die ermittelte Rufnummer in einem der Speicherplätze 35,...,39 des ersten Speichers 10 abgelegt ist. Ist dies der Fall, so wird zu Programmpunkt 170 verzweigt, andernfalls wird zu Programmpunkt 120 verzweigt. Bei Programmpunkt 120 werden die den Speicherplätzen 35,...,39 des ersten Speichers 10 gemäß den dort abgelegten Adressen zugeordneten Speicherplätze 40,...,44 des zweiten Speichers 25 nach gespeicherten Anzahlen von Durchwahlziffern abgesucht. Sind solche Anzahlen in entsprechenden Speicherplätzen des zweiten Speichers 25 abgespeichert, so wird die kleinste Anzahl a ermittelt. Bei Programmpunkt 130 findet in dem Vergleicher 15 ein Vergleich zwischen der in der Rufidentifikationsschaltung 5 ermittelten Rufnummer und den Rufnummern der Speicherplätze 35,...,39 des ersten Speichers 10 statt, wobei jeweils die letzten a Ziffern nicht berücksichtigt werden. Ist dieser Vergleich erfolgreich, so wird zu Programmpunkt 170 verzweigt, andernfalls wird zu Programmpunkt 140 verzweigt. Bei Programmpunkt 140 wird die Anzahl a um 1 erhöht. Bei Programmpunkt 150 wird geprüft, ob im zweiten Speicher 25 die neue Anzahl a größer als die im zweiten Speicher 25 gespeicherte maximale Anzahl von Durchwahlziffern ist. Ist dies der Fall, so wird zu Programmpunkt 160 verzweigt, andernfalls wird zu Programmpunkt 130 verzweigt. Bei Programmpunkt 170 wird der der identifizierten Rufnummer zugeordnete Datensatz aus dem zweiten Speicher 25 geöffnet und über den Vergleicher 15 der Anzeigevorrichtung 20 zur Anzeige zugeführt. Die Anzeige des geöffneten Datensatzes erfolgt dann bei Programmpunkt 180 an der Anzeigevorrichtung 20. Bei Programmpunkt 160 wird an der Anzeigevorrichtung 20 dem Benutzer mitgeteilt, daß zur Rufnummer des rufenden Teilnehmers kein Datensatz im zweiten Speicher 25 gespeichert ist. Nach Programmpunkt 160 bzw. Programmpunkt 180 ist das Programm beendet.

Die erfindungsgemäße Telekommunikationseinrichtung 1 kann beispielsweise im professionellen Bereich des Telefonmarketings, des Bestellwesens und des Service eingesetzt werden. In diesen Bereichen ist der schnelle Zugriff auf die gespeicherten Kundendaten zur Bearbeitung des Kundenwunsches erforderlich. Dabei sind die Daten des Anrufers noch vor Rufannahme verfügbar, da die Rufnummer des rufenden Teilnehmers bereits während des Rufvorgangs an die Teilnehmereinrichtung 1 übertragen wird. Die Übertragung bzw. Signalisierung der Rufnummer an die Telekommunikationseinrichtung 1 kann digital, beispielsweise im ISDN, oder auch analog erfolgen.

## Patentansprüche

1. Telekommunikationseinrichtung (1) mit einer Rufidentifikationsschaltung (5) zur Identifikation der Rufnummer eines rufenden Teilnehmers, einem Speicher (10) zur Speicherung von Rufnummern und einem Vergleicher (15) zum Vergleich von Rufnummern rufender Teilnehmer mit im Speicher (10) abgelegten Rufnummern, wobei bei Übereinstimmung der Rufnummer eines rufenden Teilnehmers mit einer im Speicher (10) abgelegten Rufnummer in der Telekommunikationseinrichtung (1) gespeicherte Daten des rufenden Teilnehmers an einer Anzeigevorrichtung (20) darstellbar sind, **dadurch gekennzeichnet, daß** bei Nichtübereinstimmung der Rufnummer des rufenden Teilnehmers mit einer im Speicher (10) abgelegten Rufnummer eine Kürzung der Rufnummer des rufenden Teilnehmers an ihrem Ende um eine vorgegebene Anzahl von Ziffern erfolgt und ein Vergleich von im Speicher (10) abgelegten Nebenstellenhauptnummern mit der gekürzten Rufnummer stattfindet.

2. Telekommunikationseinrichtung (1) nach Anspruch 1, **dadurch gekennzeichnet, daß** ein Datensatz mehreren im Speicher (10) abgelegten Rufnummern zugeordnet ist.

3. Telekommunikationseinrichtung (1) nach Anspruch 1 oder 2, **dadurch gekennzeichnet, daß** im Speicher (10) abgelegten Rufnummern, die Nebenstellennummern sind, die jeweilige Anzahl der Durchwahlziffern zugeordnet und ebenfalls in der Telekommunikationseinrichtung (1) gespeichert ist.

## Claims

1. Telecommunication device (1) comprising a call identification circuit (5) for identifying the directory number of a calling subscriber, a memory (10) for storing directory numbers and a comparator (15) for comparing directory numbers of calling subscribers with directory numbers stored in the memory (10), wherein, when the directory number of a calling subscriber matches a directory number stored in the memory (10), data of the calling subscriber, stored in the telecommunication device (1), can be represented on a display device (20), **characterized in that** when the directory number of the calling subscriber does not match a directory number stored in the memory (10), the directory number of the calling subscriber is shortened at its end by a predetermined number of digits and a comparison of main extension numbers stored in the memory (10) with the shortened directory number is carried out.

2. Telecommunication device (1) according to Claim 1, **characterized in that** a data record is allocated to a number of directory numbers stored in the memory (10).

3. Telecommunication device (1) according to Claim 1 or 2, **characterized in that** the respective number of direct dialling digits is allocated to directory numbers stored in the memory (10) which are extension numbers, and is also stored in the telecommunication device (1).

## Revendications

1. Installation de télécommunication (1) comportant un circuit d'identification d'appel (5) pour identifier le numéro d'appel d'un abonné appelant, une mémoire (10) pour enregistrer les numéros d'appel et un comparateur (15) pour comparer le numéro d'appel de l'abonné appelant à des numéros d'appel enregistrés dans la mémoire (10), et
en cas de concordance entre le numéro d'appel d'un abonné appelant et d'un numéro d'appel enregistré dans une mémoire (10), les données de l'abonné appelant, enregistrées dans l'installation de télécommunication (1) sont présentées sur un dispositif d'affichage (20),
**caractérisée en ce que**
en cas de non concordance entre le numéro d'appel de l'abonné appelant et un numéro d'appel enregistré dans la mémoire (10), on raccourcit le numéro d'appel de l'abonné appelant près de son extrémité, d'un nombre prédéfini de chiffres et on compare les numéros principaux des postes auxiliaires enregistrés dans la mémoire (10) avec le numéro d'appel raccourci.

2. Installation de télécommunication (1) selon la revendication 1,
**caractérisée en ce qu'**
un jeu de données est associé à plusieurs numéros d'appel enregistrés dans la mémoire (10).

3. Installation de télécommunication (1) selon l'une quelconque des revendications 1 ou 2,
**caractérisée en ce que**
les numéros d'appel enregistrés dans la mémoire (10) sont des numéros de postes auxiliaires associés au nombre respectif de chiffres de sélection et enregistrés le cas échéant dans l'installation de télécommunication (1).
